# EUROPEAN PATENT APPLICATION

(11) **EP 0 615 393 A1**
(43) Date of publication of application: **14.09.1994**
(21) Application number: 94102396.2
(22) Date of filing: 17.02.1994
(51) Int. Cl.: H04Q 7/04

(54) **A method for packet data transmission on a cellular voice network**

(30) Priority: 10.03.1993 US 29093
(71) Applicant: MOTOROLA, INC., Schaumburg, IL 60196 (US)
(72) Inventor: Hollingsworth, Gale, Chandler, Arizona 85224 (US); Dasenbrock, Raymond D., Scottsdale, Arizona 85253 (US)
(74) Representative: Hudson, Peter David

(57) **Abstract**

A method for high speed packet data transmission on a conventional cellular voice network (5,10). This method assigns several voice channels (N+1) to be used as high speed packet data channels (1-N) and it assigns one channel to be used as a digital data control channel. Special high rate data phones (1-N) are periodically required to transmit data. The digital data control channel is examined (122) for an available data channel within a cell. The available data channel is then attempted to be seized (46-50) for transmission. If unsuccessful, the high rate data phone tries again (54-56) within a matter of a few seconds. If successful, the high rate data phone transmits (112) its data and releases the data channel for subsequent use by other high rate data phones.

## Description

### Background of the Invention

The present invention pertains to digital data transmission on cellular networks and more particularly to high volume packet data transmission on a cellular voice communication system.

Modern cellular telecommunication systems are predominantly voice telecommunication systems. However, the demand for increased digital data to be carried on these systems is growing.

Typically digital data is packetized before being transmitted by telecommunication system. These packets may be of fixed or variable length and are typically relatively short messages, between .02 and 10 seconds. Voice communications in such cellular telecommunication systems is typically in multiples of minutes.

Existing cellular digital data telecommunication systems are basically telephones coupled via modems. The call setup time for such modem transmission of data is on the order of approximately 1 to 5 seconds. Although this time is suitable for cellular call setups, it restricts data transmission rates to sub hertz values. Applications typically require data rates 2 and 3 orders of magnitude greater. In addition, 1 to 5 second setup times are greater than most packet data transmission times. New systems for facilitating the transmission of digital data in cellular telecommunications may be designed; however, providing new infrastructure for such systems which are now served by standard cellular telecommunications is not cost effective. Other telecommunication systems may operate by stealing time from conventional cellular channels. That is, such systems would have their digital cellular phone equipment transmit at very low power levels in the existing cellular voice channels. The transmission packet bursts would be relatively short in duration. However if a conventional voice transmission was assigned to the particular channel, the power level would be substantially greater than the low level of the packet data transmitter and the packet data transmitter would be over-ridden by or programmed to drop off the channel. However, since such systems are stealing time from voice channels they would be inefficient and unreliable for digital data throughput.

Accordingly, it would be highly desirable to provide a digital data packet transmission arrangement for increasing digital data rate transmission which operates either in full compatibility with or integrated within existing conventional cellular voice telecommunication systems.

### Summary of the Invention

In accordance with the present invention, a novel method for an increased rate of digital data transmission by reducing total packet transmission time, by providing for a variable number of channels dedicated to the transmission of data, and by reallocation of data/voice channels over a cellular voice telecommunication network is shown.

A method for transmitting digital data over a cellular telephone system first assigns a voice channel of the cellular system as a digital data channel. Next, a data phone selects the digital data channel. The data phone then transmits the digital data packet and then releases the digital data channel for use by other data phones.

### Brief Description of the Drawing

FIG.1 is a block diagram of a digital data transmission arrangement in accordance with the present invention.

FIG.2 is a prior art flow diagram of a standard mobile system attachment sequence.

FIG.3 is a mobile system attachment sequence flow diagram in accordance with the present invention.

FIG.4 is a prior art flow diagram of a standard cellular voice transmission setup sequence.

FIG.5 is a flow diagram of a digital data transmission setup sequence in accordance with the present invention.

FIG. 6 is a flow diagram of a digital data transmission system in accordance with the present invention.

FIG.7 is a block diagram of data phones as shown in FIG.1.

FIG.8 is a block diagram of the cellular base station and central controller as shown in FIG.1.

### Description of the Preferred Embodiment

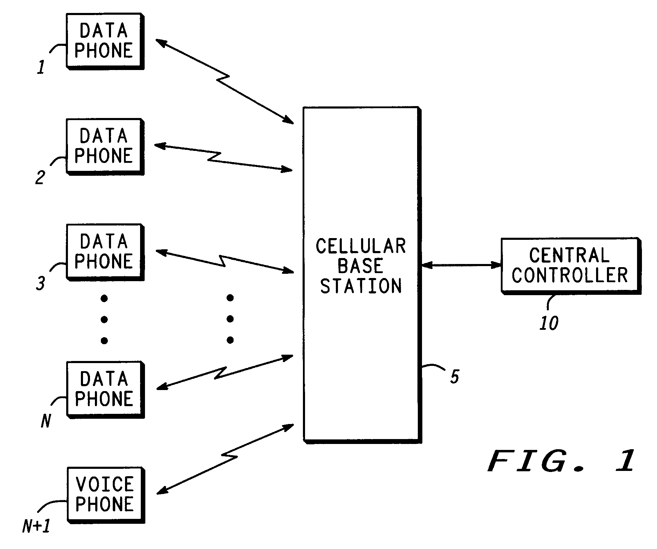

FIG.1 is a block diagram of a cellular telecommunication system which supports voice communication and is modified to include data communication from a number of high rate data phones 1 through N. Standard set-up voice phone N+1 is coupled to cellular base station 5 in a conventional manner as with existing cellular telecommunication systems. Cellular base station 5 may include a Dynatac HD-II which is manufactured by Motorola, Inc. Cellular base station 5 will be modified to meet the needs of data phones 1 through N and such modifications will be shown hereinafter. The modified cellular communication system will support both the standard set-up voice phones and the high rate data phones as shown in FIG.1. It can also be implemented as a stand-alone data communications network, fully compatible with frequency allocations in the cellular radio, land mobile radio, or trunked land mobile communications bands.

The voice phones of this system may be conventional cellular phones such as those manufactured by Motorola, Inc. and other manufacturers. In a preferred embodiment of the invention the Motorola Micro T.A.C.™ is very useful for the data phones 1 through N since it is very lightweight and physically small. Central controller 10 includes a computer and modem for communication of both transmitted and received data and traffic control information with cellular base station 5.

Dedicated high data rate channels provided by cellular base station 5 would be used as digital data control channels in the preferred embodiment of the invention. Data phones 1 through N would be modified to automatically seek the appropriate digital data control channel which has been dedicated at the cellular base station 5. The digital data control channel would, at predetermined intervals transmit a list of available voice channels which have been dedicated to serve the needs of digital data transmission. The control channel function for data transmissions can be combined onto a control channel utilized in the setup of voice calls or can be provided on a separate dedicated digital data control channel. Typical cellular systems (base station) provide hundreds of voice channels and dozens of control channels for voice. The packet data cellular communication system contemplated herein may be implemented with or without a single dedicated digital data control channel and with a small number less than 10 voice channels which are dedicated to data transmission. This is due to the fact that most data transmission times for typical digital data packets is substantially less than a second. In contrast, voice communications proceed in the range of minutes since the transmission of voice is relatively slow.

Once a data phone has coupled to the digital data control channel and received the list of available channels, the data phone picks at random one of the channels for its data transmission. The data phone also checks for overall loading of channels within the cell to determine that adequate channel capacity is available. Next, the quality of the voice channel which is selected to digital data is checked. If the channel is still viable, the data phone sits at ready on this channel until a data message needs to be sent. When the data phone initiates a data message, the base station acknowledges the beginning of that message within a certain time window. The channel is then marked busy and the message is completed. The data phone then releases the channel for subsequent use by another data phone.

If the transition to busy occurs outside the desired time window, it is presumed the base is responding to another data phone and transmission from the subject data phone immediately ceases until the busy signal is removed. Because of the shorter packet size of the digital data and the high speed transmission of digital data, data phones need only hold a channel a very short time as compared to a conventional voice conversation.

In a preferred embodiment of the invention, each of the data phones may be carried by a soldier in a mock or real battlefield. The data phone would then report the time, identity, and position of a soldier to a central collection agency via the cellular base station 5. The time of day may be calculated directly by the data phone attached to the soldier. The position may be calculated by a multilateration or a differential global positioning system arrangement for example. The identity of the soldier may simply be affixed to this collection of digital information. In this way a central computer may track soldiers as they proceed through "war game" exercises or in actual battles. Time and position of each soldier may be tracked as well as the simulated effects of any heavy armament, nuclear, biological, or other mass destruction weapons deployed in the soldier's area. Similarly vehicles such as trucks or tanks or aircraft may also be tracked. Since the amount of data required for constant monitoring of each unit is very small, a particular channel may be shared by hundreds of data phones and still provide the central computer with the ability to accurately track the position of each soldier or vehicle.

The cellular data transmission system shown herein is also very useful for such situations as package pick-up and delivery service monitoring. This digital data transmission arrangement would also be useful for applications such as vehicle tracking including tracking of police cars, taxi cabs and public transportation vehicles such as buses.

In the above mentioned "war games" battlefield scenario each digital data packet would require approximately 80 milliseconds to transmit. As a result, a given channel would have the capacity to transmit over 10 messages per second.

As can be appreciated from the above, the invention disclosed herein provides for transmitting short bursts (packets) of data via a modified conventional cellular voice telecommunication network. Such a system is particularly advantageous for tracking people or things such as moving vehicles.

Placing a call or transmitting a data packet in a cellular system involves two basic operations. First, the cellular phone must attach to a suitable cell site and enter the enable communication state. Then, when the phone, either voice or data, is needed to place a call or send data, the second operation, call setup and release, is accomplished.

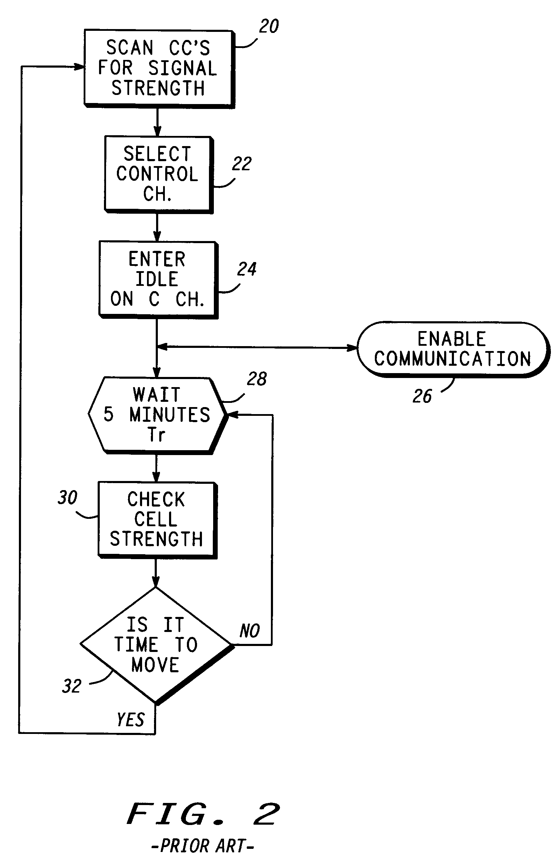

FIG.2 depicts a standard cellular system attachment sequence as known in the prior art. Such procedure is shown in EIA Interim Standard Cellular System Mobile Station--Land Station Compatibility Specification, IS-3-D, March 1987. For a standard cellular voice phone Block 20 scans available control channels for signal strength. Block 22 selects the control channel with the strongest signal strength and one alternate control channel with a relatively strong signal strength. Next, the voice phone enters an idle condition on the control channel, block 24. The voice phone is listening on the strongest control channel that it can find. The voice phone then enables communication by listening on the control channel for its name and an indication of the frequency to which it is to tune. If no message is received by the voice phone or if no message is required to be transmitted, the voice phone remains in the idle state listening on the channel, Block 26.

Next the voice phone waits 5 minutes which is the reselect time (Tr), Block 28. Next the voice phone checks the cell strength by examining the signal strength of the control channel, Block 30. Block 32 then determines whether the cell strength requires that the data phone be transferred to another cell. If the transfer of the voice phones communication to another control channel is required Block 32 transfers control to Block 20 to pick a new control channel. If transfer to another cell is not required, Block 32 transfers control via the NO path to block 28 which generates the reselect time Tr of 5 minutes. As a result the voice phone checks the channel strength every 5 minutes to determine whether to stay on a control channel which represents one cell or to move to another control channel representing another cell.

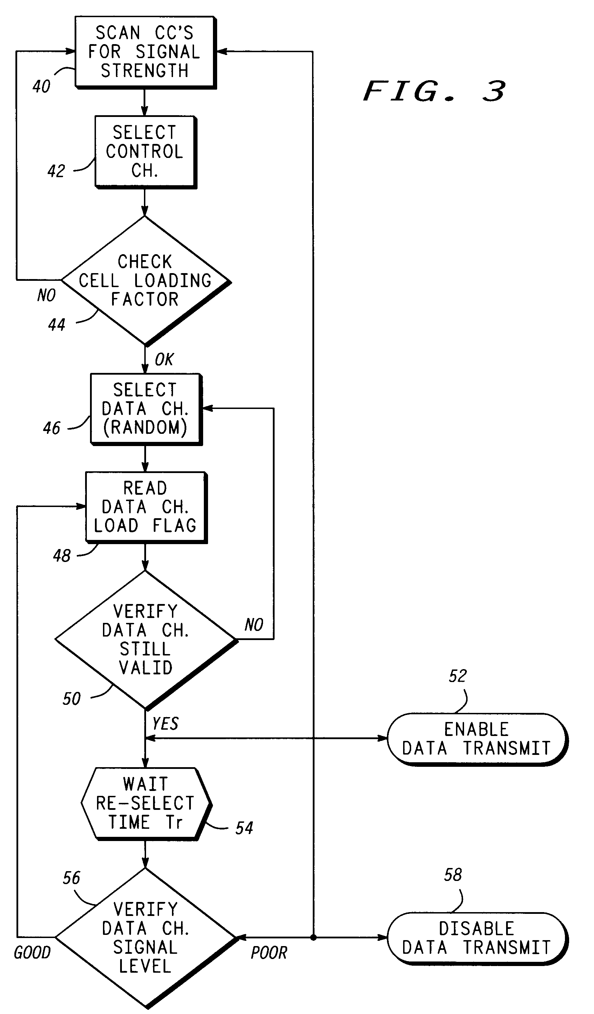

FIG.3 depicts the flow diagram for the modified attachment sequence operation for the high data rate data phone operation as compared to the standard cellular voice phone of FIG.2. Block 40 scans the control channels for signal strength similar to Block 20. Block 42 selects the strongest control channel signal strength and an alternate similar to Block 22. Block 44 checks the loading factor for the cell of the strongest signal strength. If the loading factor is exceeded, this cell is busy and Block 44 transfers control to Block 40 via the NO path to scan for another control channel. If the cell loading factor is not exceeded, Block 44 transfers control to Block 46 via the OK path. Block 46 selects a digital data channel randomly from a list of available data channels.

Block 48 reads the data channel load flag to determine whether there is an excessive amount of data phone traffic on this particular channel.

Next Block 50 verifies that the data channel signal strength is acceptable. If the channel signal strength is not acceptable, Block 50 transfers control to Block 46 via the NO path which randomly selects another channel. Then Block 52 enables the high data rate data phone for data transmission. If no message is to be sent, the data phone waits in the enabled state for time Tr which is the reselect time which is approximately 5 seconds long. Depending upon message lengths and transmission times, other reselect times in the range of seconds (1-60) approximately may be chosen. When the reselect time has elapsed, Block 56 verifies whether the data channel signal level is still of a sufficient quality to enable transmission. If the signal level is of a poor quality the previously enabled data transmit is disabled Block 58 and control is transferred via the POOR path to Block 40 for selecting a new control channel and data channel. If the data channel signal level is of sufficient strength Block 56 transfers control to Block 48 via the GOOD path. Block 48 reads the data channel loading flag to determine that the data phone traffic level for this channel has not become excessive and returns the data phone to the Block 52 enabled wait state.

The call setup and release sequences of prior art will now be compared to the data phone implementation of the invention herein disclosed.

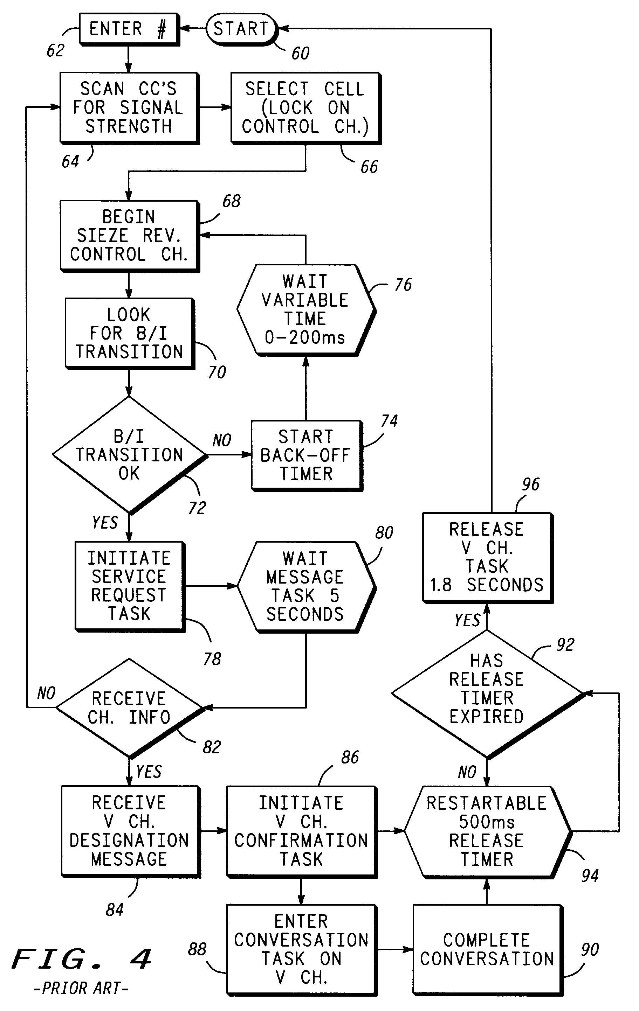

Referring to FIG.4 the standard mobile initiated call setup sequence according to standard EIA IS-3-D is shown. In FIG.4 the process is begun and start block 60 is entered. Next, the number to be called is entered, Block 62. Block 64 then scans the control channels for a number of cells to determine the signal strength of the control channels. In this way the control channel with the greatest signal strength is selected and this indicates the particular cell with the greatest reception from the telephone user's present position. The cell with the control channel having the greatest signal strength is locked onto by the voice phone, Block 66.

Next, the control channel with the greatest signal strength is seized, Block 68. Next the busy/idle indicator is examined to determine that the control channel is available, Block 70. Block 72 determines whether the busy/idle transition was properly made for the control channel seizure by the voice phone. If the busy idle transition has not been successfully made, Block 72 transfers control to Block 74 via the NO path. Block 74 starts a back-off timer. Block 76 then waits a variable time up to to 200 milliseconds and transfers control back to Block 68.

If the busy idle transition for the control channel was successful Block 72 transfers control to Block 78 via the YES path. Block 78 initiates the service request for the particular voice phone. Block 80 then waits for up to 5 seconds for the voice channel information to be received by the voice phone.

Block 82 determines whether the voice channel information has been properly received. If the voice channel information has not been properly received, Block 82 transfers control to Block 64 via the NO path and a new control channel with sufficient strength is sought. If the voice channel information is properly received Block 82 transfers control to Block 84 via the YES path. The voice channel designation is received and the data phone tunes to the selected voice channel, Block 84. Next Block 86 initiates the voice channel information by which the base station confirms the assignment for a particular voice channel to a particular voice phone user. Then the conversation task is begun on the voice channel, Block 88. When the conversation has been completed, Block 90 transfers control to Block 92. Block 92 determines whether the release timer has expired. If the release timer has not expired Block 92 transfers control to Block 94 via the NO path. Block 94 starts the release timer of 500 milliseconds and transfers control to Block 86 to repeat the loop of Blocks 88, 90 and 92. If the conversation has not been completed the release timer does not expire. On the expiration of the release timer, Block 92 transfers control to Block 96 via the YES path. Block 96 then releases the voice channel which requires approximately 1.8 seconds and transfers control to Block 60 where the process may be begun again, provided the data phone is still in the enable communication state.

As can be seen from the above prior art flow diagram of FIG.4, there are many processing steps in the voice phone setup in a cellular network and there are many wait functions such as Block 76, 80 and 94. While this is acceptable for calls lasting an average of 2 to 3 minutes, it is quite inefficient if used to transmit data packets of 0.02 to 10 seconds in length. In addition for sending data on such a voice channel there would be included the steps of synchronizing a modem at the cellular base station and data phone for receiving and transmitting. This step would require extra time in addition to the already mentioned lengthy process. Therefore, the present invention addresses the simplifying the data transmission processing steps shown in FIG.4.

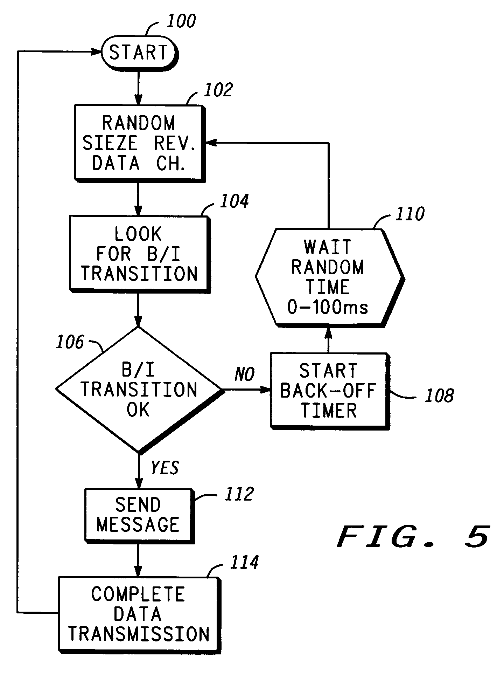

Referring to FIG.5 the channel acquisition process according to the present invention is shown. As can be seen from the comparison of Figs. 4 and 5 the process of the present invention embodied in FIG.5 is much more streamlined than the prior art process shown in FIG.4

The process as shown in FIG.5 is for the data phones as shown in FIG.1. The process is begun and Block 100 is entered. At this point a particular data phone has determined that it requires to transmit data. Block 102 seizes the reverse data channel. Please recall from FIG.3 that while the data phone was performing the system attachment sequence, but not yet requesting service, it was self assigned to an acceptable, unloaded data channel based upon its then current location. This operation which, unlike the prior art requires no channel transmission time, is performed prior to the time in which data must be transmitted providing a considerable reduction in the time to actually send a message when needed. Each channel consists of a forward and reverse channel. The forward channel is for transmitting data from the base station to the particular phone and the reverse channel is for transmitting data from the phone to the base station. These two channels are approximately 45 megahertz apart in frequency.

Next Block 104 looks for a busy idle transition within the acceptable window, similar to that of Block 72 in the prior art. If the busy idle transition indicator has not been properly set, Block 106 transfers control to Block 108 via the NO path. Block 108 initiates a back-off timer. Block 110 times a random time up to 100 milliseconds and then transfers control to Block 102 which attempts to reseize the particular data channel which has been previously assigned.

If the busy idle transition was successful for the particular data channel to be used, Block 106 transfers control to Block 112 via the YES path. Block 112 sends the packet digital data message. Block 114 then completes the data transmission and releases the data channel to be used by another data phone user. The data phone then returns to the start position ready for its next data communication, provided the enable data communication state is still active.

As can be seen the process which is most often repeated, that is sending the data process, has been substantially streamlined and operates in a second whereas the prior art process of FIG.4 requires several to 10's of seconds to complete. Thus there is a substantial saving in real time data transmission and as a result the number of data users which the system can serve is greatly increased in the present invention.

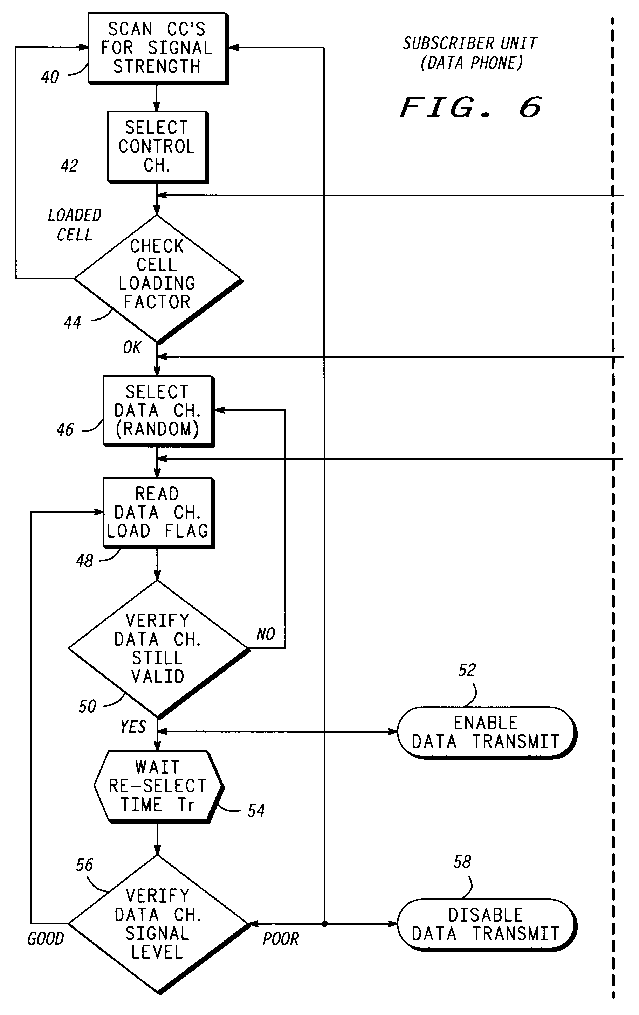

Referring to FIG.6 a flow diagram of the operation of the subscriber unit (data phone), cellular base station and central controller as shown in FIG.1 are depicted. The flow diagram shown at the left for the data phone is exactly the same flow diagram as previously discussed in FIG.3. As previously mentioned the process for the data phone is for bringing it on-line and ready to transmit. Whenever the data phone of the subscriber is on Block 40, it scans the control channels for their signal strength. Block 42 selects the control channel of the strongest signal strength. Block 120 of the cellular base station then transmits the cell loading flag for this particular cell to the data phone. Block 44 compares the cell loading information from the cellular base station to determine whether its particular data transmission will fully load the cell or whether there is available capacity within the cell for its transmission. If the cell would be fully loaded Block 44 transfers control for Block 40 to repeat the process for another cell. If the present data transmission would not load the cell Block 44 transfers control to Block 46. Block 122 of the cellular base station then transmits the list of available data channels to the data phone. Block 46 randomly selects one of the data channels. Block 48 then reads the loading flag transmitted by Block 142. Block 50 verifies that the selected data channel is still valid. If the data channel selected is not able to be used Block 50 transfers control to Block 44 via the NO path and another channel is selected at random. If the particular data channel is still valid Block 52 enables the data transmission and transfers control to Block 54. Block 54 then waits for the reselect time Tr. When the time has expired, Block 56 determines whether the data channel signal strength is sufficient. If the signal strength is sufficient Block 56 transfers control to Block 48 via the GOOD path which again reads the load control flag for the data channel and waits for a message to be initiated. If the data channel signal level strength has become poor the data transmit indication is disabled and Block 56 transfers control to Block 40 via the POOR path. Block 40 scans for another control channel and another cell which may indicate that the user has moved to a different cell.

Blocks 124 and 136 through 140 of the cellular base station performs these cell loading and data channel loading calculation. This information includes the loading of channels within each cell which channel loading flags are transmitted via Block 142 to the data phone. These cell loading indicators are also transmitted by Blocks 124 and 136 to 140 to the central controller. Blocks 126, 128 and 130 of the cellular base station perform the load shed timing for data channels 1 to and up N respectively. Each of the data channel load shed timers 126 etc. monitors the loading of data channel 136 etc. providing for controlling the number of data phones to be used on a given channel. If data phone users are selecting channels which are sufficiently loaded with users the data channel load shed timers 126, 128, 130 will remove these channels from the channel available list of block 122 for a particular time, and transmit the data channel load Block 142 as well. The transmit channel available list, Block 122 is therefore a dynamically changing list, containing at any given time only the channels which can accept additional traffic. The time setting of the individual load shed timers is adjusted to a certain level of reduction in load before additional users are permitted on the associated data channel. Similarly, the presence of the data channel load flag, Block 142, causes a portion of the data phones already assigned to a particular data channel to be re-assigned in response to the load shed timer associated with that data channel. This is accomplished by the re-selection process of Blocks 48, 50, 54, and 56. Whenever the wait re-select timer of a particular data phone causes the read data channel load flag process to occur concurrent with the time in which the data channel load shed flag is causing Block 142 to assert the data channel load flag condition, that particular data phone will be re-assigned. Since there if a normal time spreading, or randomness in the occurrence of the approximately 5 second re-selection process of Blocks 48, 50, 54, and 56, the reading of the load flag, Block 48 may or may not occur when the flag, Block 142 is asserted. If the load shed timer (124-130) requires the load flag to be asserted for a longer period, a greater number of data phones previously on that associated channel will be re-assigned. In this way, the interval of the load shed timer will control or throttle the rate of decrease or increase of loading on that channel.

Further, the loading of these data channels is monitored by Blocks 136, 138 and 140 and is reported to the central controller. The central controller analyzes this information and under control of a user defined system outputs to block 132 updates to the data channel assignment table. That is, the central controller computer monitors loading among the dedicated channels to the particular communication function for which the data is being transmitted and may add or remove channels from the available list and assign new channels as required. These channels added or removed may be transferred between data and voice channels, and in the same or different cells.

The streamlined data transmission via conventional cellular voice or compatible digital only networks may be implemented in either public or private cellular communication systems. Conventional cellular voice phones will require the modification shown in FIG.s 3 and 5. The base station will require the modification shown for the cellular base station in FIG.6. Both phones and base stations can easily contain both conventional voice and modified data features if desired. The central controller may be arranged to provide for operating any number of cells and channels within each cell. In addition the central controller may provide for load sharing of the cells and any other desired customized features for controlling and reporting activity through the cellular base station.

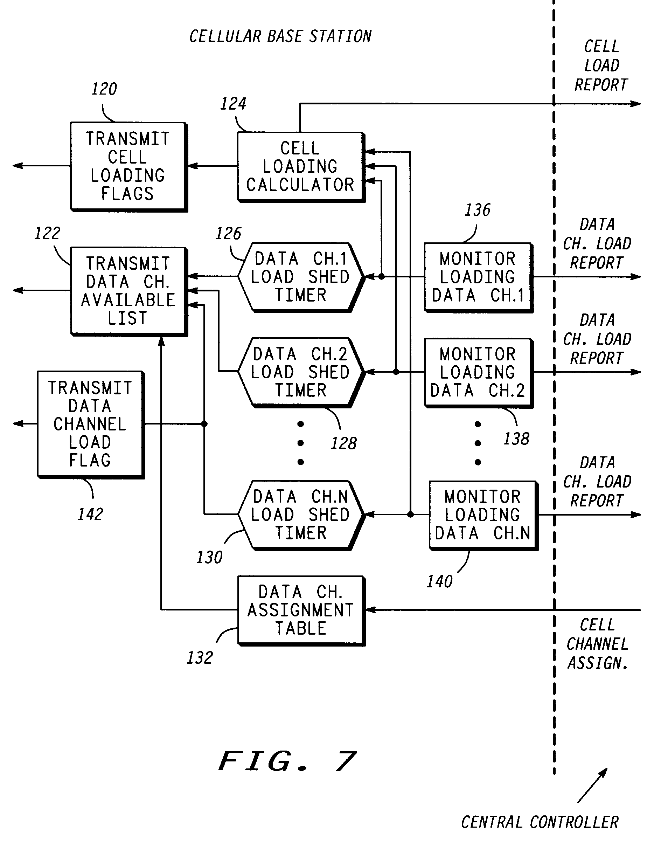

FIG.7 depicts a block diagram of the cellular data phone embodying the present invention. CPU 150 would operate as discussed above in Figs. 3 & 5. CPU 150 is coupled to transceiver 155. Transceiver 155 couples to the cellular base station as a radio telephone.

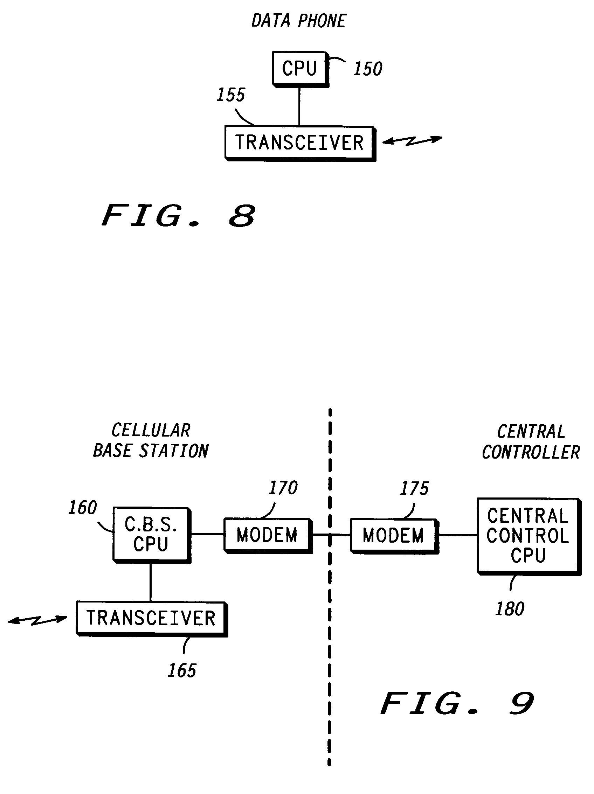

Additionally referring to FIG.8 transceiver 155 of the data phone couples to transceiver 165 of the cellular base station. Transceiver 165 is coupled to cellular base station CPU 160. Information received from each of the data phones is transmitted via transceiver 165 to the CPU 160. Cellular base station CPU 160 is coupled to central controller CPU 180 either directly or via modems 170 and 175 through any switching network (not shown). Communication between the cellular base station CPU 160 and the central controller CPU 180 is achieved either directly or through modems 170 and 175.

A method for rapidly transmitting digital data through a conventional cellular voice data network has been shown. This method provides the advantages of rapidly transmitting short and medium bursts of digital packet data via a cellular telephone or cellular data network. By dedicating a portion of existing control channels or separate control channel and by dedicating several digital data channels the above method may quickly and efficiently serve a large number of digital data phone transmitters. Many cellular data transmitters may share a single data channel. The central controller may exercise load shed control and sharing among cells of the cellular based station or within cells among channels of each cell. The primary advantage of such method is the speed of access and therefore the increased number of individual data transmitters may be handled by the system. The flexibility of automatic assignment and re-assignment of data channels as data loading changes is also a key, spectrum saving advantage of the system. It can readily coexist with voice cellular services with optimum spectral use being prioritized by the programming setup of the central controller. The system is very adaptable for use in monitoring the movement and location of individuals such as soldiers or police and vehicles such as tanks, public vehicles or taxis and for monitoring the delivery and movement of packages or any other data which can be transmitted in short bursts.

Although the preferred embodiment of the invention has been illustrated, and that form described in detail, it will be readily apparent to those skilled in the art that various modifications may be made therein without departing from the spirit of the invention or from the scope of the appended claims.

## Claims

1. A method for transmitting digital data over a cellular telephone system comprising the steps of:
assigning (5,10) at least one voice channel of the cellular telephone system as a digital data channel;
selecting (40-46) by a data phone the digital data channel;
transmitting (52) by the data phone a digital data packet; and
releasing by (58) the data phone the digital data channel.

2. A method for transmitting digital data as claimed in claim 1, wherein there is further included the step of assigning (42) at least one voice channel of the cellular telephone system as a digital data control channel.

3. A method for transmitting digital data as claimed in claim 2, wherein the step of assigning at least one voice channel includes the steps of:
assigning (5,10) a plurality of voice channels of the cellular telephone system as digital data channels; and
reading (44) by the data phone a list of the plurality of assigned digital data channels broadcast on the digital data control channel.

4. A method for transmitting digital data as claimed in claim 3, wherein said step of selecting by a data phone includes the step of randomly selecting (102) one of the plurality of digital data channels from the assigned plurality of digital data channels.

5. A method for transmitting digital data as claimed in claim 4, wherein there is further included the steps of:
setting (102,104) a busy/idle indicator corresponding to the randomly selected digital data channel; and
determining (106) whether the busy/idle indicator is properly set to a busy condition for the randomly selected digital data channel.

6. A method for transmitting digital data as claimed in claim 5 wherein the step of transmitting (112) by the data phone a digital data packet is performed, only if it is determined that the busy/idle indicator is properly set to the busy condition.

7. A method for transmitting digital data as claimed in claim 5, wherein there is further included the step of waiting (110) a randomly determined time, if the step of determining whether the busy/idle indicator was properly set to the busy condition is unsuccessful.

8. A method for transmitting digital data as claimed in claim 7, wherein there is further included the step of repeating (102-110) the steps of setting a busy/idle indicator and determining whether the busy/idle indicator of the digital data channel is properly set, if said step of determining is unsuccessful.

9. A method for transmitting digital data over a cellular telephone system comprising the steps of:
selecting (40-46) by a data phone at least one channel assigned as a digital data control channel by the cellular telephone system;
randomly (102) selecting one of a plurality of dynamically assignable digital data channels associated with a same cell as the selected digital data control channel;
checking (56) the selected digital data channel for an acceptable level of signal strength; and
enabling (52) said data phone for subsequent data transmission, if the signal strength of the digital data channel is at or above the acceptable level.

10. A method for transmitting digital data as claimed in claim 9, wherein there is further included the step of dynamically adjusting (132) a number of the digital data channels in the plurality of digital data channels in response to digital data channel traffic load determination by a central controller.
